(19) Europäisches Patentamt
European Patent Office
Office européen des brevets

(11) Publication number: 0 109 685
A1

(12) EUROPEAN PATENT APPLICATION

(21) Application number: 83111610.8

(22) Date of filing: 21.11.83

(51) Int. Cl.³: A 23 L 1/236
A 23 L 2/38

(30) Priority: 22.11.82 US 443255
24.10.83 US 544909

(43) Date of publication of application: 30.05.84 Bulletin 84/22

(84) Designated Contracting States: AT BE CH DE FR GB IT LI NL SE

(71) Applicant: G.D. Searle & Co.
Box 1045
Skokie, Illinois 60076(US)

(72) Inventor: Tsau, Josef
5348 Brummell Street
Skokie, Ill. 60076(US)

(74) Representative: Wolff, Hans Joachim, Dr.jur. Dipl.-Chem. et al,
Beil, Wolff & Beil Rechtsanwälte Postfach 80 01 40
Adelonstrasse 58
D-6230 Frankfurt am Main 80(DE)

(54) **Enhanced-solubility aspartame compounds.**

(57) This invention relates to a class of soluble sweetener compositions comprising a mixture of a depeptide sweetener and a solubilizing agent. The compositions are readily dissolved in aqueous solution.

EP 0 109 685 A1

Croydon Printing Company Ltd.

Our No. 24 268

G.D. Searle & Co.

Skokie, Ill. USA.

ENHANCED-SOLUBILITY ASPARTAME COMPOUNDS

## BACKGROUND OF THE INVENTION

This invention relates to a class of novel dipeptide sweetener compositions and to a method for increasing the solubility of dipeptide sweeteners. In particular, this invention relates to sweetener compositions comprising a mixture of a dipeptide sweetener and one or more solubilizing agents. The invention further relates to a method for increasing the solubility of dipeptide sweeteners in aqueous solutions.

It has been found that certain dipeptide compounds, in particular α-L aspartylphenylalanine methyl ester (aspartame), possess an intense sweetness. Aspartame's preparation and use are described in U. S. Patents Nos. 3,492,131; 3,642,491; and 3,780,189. These patents are incorporated herein by reference.

Although these dipeptides possess significant sweetening properties, such dipeptides generally have limited solubility and the rate of dissolution of the dipeptides into aqueous solutions is markedly slower than sucrose. While the problem of dissolution rate and solubility of dipeptide sweeteners is well documented, little has been done to overcome the problem. Attempts to increase the solubility of the dipeptides via the

formation of various salts and metal complexes of the dipeptides have been described.

U.S. Patent No. 4,029,701 describes the hydrohalide salts of dipeptide sweeteners as being more soluble in aqueous solutions than the dipeptide sweetener itself. However, such dipeptide hydrochloride salts do not exhibit thermal stability. U.S. Patent 4,153,737 discloses enhanced solubility of sodium and potassium salts of aspartame in glycerin. Sulfate salts and alkyl sulfonate salts of aspartame exhibiting high thermal stability and a fast rate of dissolution in aqueous media, are disclosed in U. S. Application Serial No. 06/383,393. In addition, U. S. Application Serial No. 06/354,574 relates to dipeptide sweetener-metal complexes which exhibit increased solubility in aqueous solutions. U.S. Patent 3,761,288 describes a method for spray drying aspartame in order to increase the solubility of aspartame. However, all the above references disclose dipeptide sweeteners and respective salts and metal complexes of such dipeptide sweeteners which are structurally characterized as single compounds or complexes.

SUMMARY OF THE INVENTION

The present invention relates to a novel class of dipeptide sweetener compositions comprising a mixture of a dipeptide sweetener of the formula:

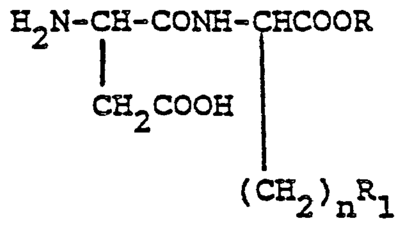

wherein the stereochemical configuration is:

DL-DL, DL-L, L-DL, or L-L;

wherein R is:

a) alkyl of from one to six carbon atoms, inclusive;

b) arylalkyl, the alkyl portion of from one to six carbon atoms, inclusive, the aryl portion of from six to ten carbon atoms inclusive; or

c) cycloalkyl of from three to seven carbon atoms inclusive;

wherein n is an integer of from 0 to 5;

wherein $R_1$ is:

a) alkyl of one to six carbon atoms, inclusive; or

b) a saturated, unsaturated, or partially saturated 6 carbon ring, which may be optionally unsubstituted or substituted at the 4 position by $R_2$.

wherein $R_2$ is:

a) hydroxy;

b) alkoxy of one to six carbon atoms, inclusive;

c) alkyl of one to six carbon atoms, inclusive;

d) halogen; or

e) $S(O)_f(CH_2)_k(CH_3)$ wherein f is 0, 1, or 2, wherein k is an integer of from 0 to 5, with the proviso that n is 1 or 2;

and a solubizing agent, wherein the solubilizing agent is $H_2SO_4$ or a solubilizing salt selected from the group consisting of:

$NaHSO_4$; $KHSO_4$; $NH_4HSO_4$; $CaCl_2$; $MgCl_2$;

$Al(HSO_4)_3$; $Al(HSO_4)(SO_4)$;

$Al_2(HSO_4)_4SO_4$; $Mg_2(HSO_4)_2SO_4$;

$Ca(HSO_4)_2$; $Ca_2(HSO_4)_2SO_4$;

$Mg(HSO_4)_2$; $Zn(HSO_4)_2$;

$Zn_2(HSO_4)_2SO_4$;

$Fe(II)(HSO_4)_2$; $Fe(III)(HSO_4)_3$;

$Fe(II)_2(HSO_4)_2SO_4$; and

$Fe(III)(HSO_4)SO_4$; and

$Fe(III)_2(HSO_4)_4SO_4$,

and wherein the dipeptide sweetener and solubilizing agent are in a stoichiometric ratio of from 10:1 to about 1:20.

In addition, the invention relates to a method of preparing sweetened aqueous solutions comprising adding the above described sweetener compositions to an aqueous solution; or adding a dipeptide sweetener to an aqueous solution containing one or more of the above solubilizing agents.

## DETAILED DESCRIPTION OF THE INVENTION

A preferred dipeptide sweetener is aspartame.

The preferred compositions of the present invention comprise a mixture of aspartame and one or more solubilizing agents selected from the class consisting of $KHSO_4$; $NaHSO_4$; $Mg(HSO_4)_2$; $H_2SO_4$; and $Ca(HSO_4)_2$. The most preferred compositions comprise a mixture of aspartame and $NaHSO_4$ and/or $KHSO_4$.

Examples of alkyl of from one to six carbon atoms, inclusive are methyl, ethyl, propyl, butyl, pentyl, hexyl and the isomeric forms thereof.

Examples of an aryl portion of from six to ten carbon atoms inclusive are phenyl, naphthyl and benzyl.

Examples of cycloalkyl of from three to seven carbon atoms, inclusive are cyclopropyl, cyclobutyl, cyclohexyl, cyclopentyl, and cycloheptyl.

Examples of alkoxy of from one to six carbon atoms inclusive are methoxy, ethoxy, propoxy, butoxy, pentoxy, and hexoxy and the isomeric forms thereof.

Examples of halogen are chlorine, bromine and fluorine.

Examples of aqueous systems include water, and food stuffs containing water.

The preferred stoichiometric ratio of dipeptide sweetener: solubilizing salt is in a range of about 2:1 to 1:2 and most preferred in a range of 1:1 to 1:2.

The compositions of the present invention are prepared by merely admixing one or more solubilizing agents with a dipeptide sweetener. When the solubilizing agent is a

salt, the resulting composition is a physical mixture of a dipeptide sweetener and a solubilizing salt and involves no chemical interaction between the dipeptide sweetener and solubilizing salt. Therefore, in view of the fact that compositions of the present invention are only physical mixtures of a dipeptide sweetener and a solubilizing salt, the use of such compositions to prepare sweetened solutions eliminates the time and expense associated with the preparation of dipeptide sweetener salts. In addition, the use of the compositions of the present invention permits one to vary the solubility of the dipeptide by merely using varying amounts of the solubilizing agents.

Solutions containing the dipeptide sweeteners are prepared by either dissolving a composition comprising a dipeptide sweetener and a solubilizing agent in an aqueous solution or dissolving a dipeptide sweetener directly into an aqueous solution containing one or more solubilizing agents. Gentle heating and/or stirring may be used to improve the dissolution rate for the preparation of concentrated solutions.

The compositions of the present invention possess sweetness characteristics and may be formulated for a number of useful applications. For example, a sachet, packet or tablet may be prepared for consumer use for preparation of liquid sweetening or sweetened solutions. On an industrial scale, the compositions of the present invention may be sold in bulk for preparation for use of

concentrated sweetening solutions in restaurants, wholesale food manufacturers and the like. The high concentration solution containing the sweetener composition may be used as a liquid, low-calorie sweetener. Such a liquid, low-calorie sweetener may find utility in facilitating the manufacturing process in such foodstuffs as gelatin desserts, fruit flavored beverages, cereal, cake mixes, fruit juices, syrups, salad dressings, pet foods, tabletop sweeteners and the like. It is important to note that the compositions of the present invention are stable. The compositions of the present invention comprising a dipeptide sweetener and a salt may be stored dry and reconstituted as needed. However, it should be obvious to those skilled in the art that its utility is not restricted to the systems set forth herein and may find invaluable applicaton in pharmaceutical preparations, such as tonics and the like.

The invention will appear more fully from the examples which follow. These examples are given by way of illustration only and are not to be construed as limiting the invention either in spirit or in scope as many modifications both in materials and methods will be apparent from this disclosure to those skilled in the art. The concentration of aspartame in the compositions or solutions prepared in the following Examples is determined using high pressure liquid chromotography (HPLC) techniques. The degredation products of aspartame, that is, diketopiperazine and aspartyl phenylalanine were

simultaneously determined using similar HPLC procedures. All concentrations are by weight percent unless otherwise noted. As used herein the term "physical stability" refers to the degree to which aspartame to remain dissolved in a solution, i.e. essentially no aspartame will precipitate in a physically stable solution.

## DESCRIPTION OF THE PREFERRED EMBODIMENTS

Example 1 The compositions of the present invention were utilized to prepare the following solutions. A composition comprising a mixture of aspartame and one or more solubilizing agents were added to an appropriate amount of water and the amount of aspartame dissolved in the water was determined. The results obtained are represented in the following table.

| Sol. No. | Solubilizing Agent | Wt. (g) | APM[1] Wt.(g) | Water (ml) | Conc. APM[1] in Final Solution (wt %) |
|---|---|---|---|---|---|
| 1 | $NaHSO_4$ | 4.9 | 10 | 80 | 10.5 |
| 2 | $KHSO_4$ | 4.9 | 10 | 80 | 10.5 |
| 3 | $H_2SO_4$ (96%) | 1.67 | 10 | 50 | 16.2 |
| 4 | $CaCl_2$ $2H_2O$ | 44.0 | 6 | 100 | 4.0 |
| 5 | $MgSO_4$ | 4.13 | 10 | 80 | 10.4 |
| | + | | | | |
| | $H_2SO_4$96% | 1.75 | | | |
| 6 | --- | 0 | 1 | 99 | 1 |

[1]APM - aspartame

Example 2 The stability of aspartame in a composition comprising a mixture of $KHSO_4$ and aspartame powders was determined by mixing 455.1 g of aspartame and 225.3 g of $KHSO_4$ and determining the amount of aspartame and its decomposition products, diketopiperazine and aspartyl phenylalanine, that are present over a period of time. The results obtained are represented in the following table.

| Station (temp) | APM (Wt%) | DKP[2] (Wt%) | %AP[3] (Wt%) |
|---|---|---|---|
| Zero Time | 65.9 | 0.31 | 0.13 |
| One month (RT) | 65.4 | 0.28 | 0.15 |
| One month (45°C) | 68.0 | 0.34 | 0.17 |
| Three month (RT) | 65.9 | 0.32 | 0.14 |
| Three month (45°C) | 68.2 | 0.39 | 0.15 |

[2]DKP -- diketopiperazine

[3]AP -- Aspartylphenylalanine

Example 3 Concentrated aspartame-solubilizing agent solutions having a stoichiometric ratio 1:1.05 (aspartame: solubilizing agent) were prepared and stored at room temperature. The concentration of aspartame, diketopiperazine and aspartylphenylalanine in each solution was determined over a period of time and the results obtained are represented in the following table.

| Sol. No. | Solubilizing Agent | Hours Stored | APM | DKP | AP |
|---|---|---|---|---|---|
| A. | $KHSO_4$ | 0 | 10.2 | 0.05 | 0.03 |
| | | 6 | 10.2 | 0.05 | 0.06 |
| | | 24 | 9.9 | 0.08 | 0.19 |
| | | 48 | 9.7 | 0.12 | 0.36 |
| B. | $NaHSO_4$ | 0 | 10.0 | 0.05 | 0.03 |
| | | 6 | 9.9 | 0.05 | 0.05 |
| | | 24 | 9.8 | 0.08 | 0.16 |
| | | 48 | 9.6 | 0.12 | 0.30 |

Example 4 A solubilizing agent was first dissolved in water and aspartame was then added to the resulting solution and the physical stability of the resulting solutions was observed and the results obtained are represented in the following table.

| Sol. No. | Solubilizing Agent (Wt.) | Water (ml) | APM (Wt.) (g) | Dissolution Procedure | Physical Stability |
|---|---|---|---|---|---|
| 1. | $H_2SO_4$(1.667g) | 50 | 10 | Stir and gentle heat (to ~45°C) | Stable over 3 days |
| 2. | HCl(37%)(3.213g) | 50 | 10 | Stir and gentle heat | Stable less than an hour. (7.2g ppt. collected) |
| 3. | HCl(37%)(3.374g) | 50 | 10 | Stir and gentle heat | Stable less than 30 minutes. (6.4g ppt. collected) |
| 4. | $KHSO_4$(4.85g) | 50 | 10 | Stir and gentle heat | Stable 2 to 3 hours |
| 5. | $KHSO_4$(4.86g) | 80 | 10 | Stir and gentle heat | Solution remained stable over a week. |

Example 5 Effect of solubilizing agent concentration on the solubility of aspartame.

Various quantities of $KHSO_4$ (0 - 3g) were dissolved in 50 ml of distilled water. To each solution was added ten (10) grams of aspartame and the resulting solutions were stirred for 40 minutes. The solutions were filtered and the aspartame concentration in the filtrate was determined using high pressure liquid chromatography techniques. The data obtained is represented in the following table.

| Solution No. | Wt. of $KHSO_4$ in 50 ml water (g) | Conc. APM (Wt. %) |
|---|---|---|
| 1 | 0 | ~1 |
| 2 | 1.0 | 4.9 |
| 3 | 2.0 | 8.1 |
| 4 | 3.0 | 9.5 |

Example 6 Concentrated Tabletop Sweetener.

To a 100 ml plastic bottle having marks at 20 ml intervals was added a composition comprising 3.8 g of aspartame and 1.4 g of $KHSO_4$. The bottle may be equipped with a dropper cap and/or a spray cap. To the composition is added from about 20 to about 80 ml of warm water and the resulting solution may be used as table top concentrated liquid sweeteners for two consecutive days. The liquid sweetener can be added to coffee and other beverages using the dropper cap and fruits and other solid foods using the spray cap.

What is claimed is:

1. A dipeptide sweetener-composition comprising a mixture of aspartame and a solubilizing agent selected from the group consisting of:

$NaHSO_4$; $KHSO_4$; $NH_4HSO_4$; $CaCl_2$; $MgCl_2$;

$Al(HSO_4)_3$; $Al(HSO_4)(SO_4)$; $Al_2(HSO_4)_4SO_4$;

$Ca(HSO_4)_2$; $Ca_2(HSO_4)_2SO_4$;

$Mg_2(HSO_4)_2SO_4$; $Mg(HSO_4)_2$; $Zn(HSO_4)_2$;

$Zn_2(HSO_4)_2SO_4$; $Fe(II)(HSO_4)_2$;

$Fe(III)(HSO_4)_3$; $Fe(II)_2(HSO_4)_2SO_4$;

$Fe(III)(HSO_4)SO_4$; and $Fe(III)_2(HSO_4)_4SO_4$,

wherein aspartame and the solubilizing agent are in a stoichiometric ratio of from about 10:1 to about 1:20.

2. A composition according to Claim 1 wherein the solubilizing agent is $Mg(HSO_4)_2$.

3. A composition according to Claim 1 wherein the solubilizing agent is $NaHSO_4$.

4. A composition according to Claim 1 wherein the solubilizing agent is $KHSO_4$.

5. A composition according to Claim 1, 2, 3 or 4 wherein the stoichiometric ratio of aspartame:solubilizing agent is from about 1:2 to about 1:1.

6. A method of preparing sweetened aqueous media comprising adding a composition comprising a mixture of aspartame and a solubizing agent selected from the group consisting of;
$NaHSO_4$; $KHSO_4$; $NH_4HSO_4$; $CaCl_2$; $MgCl_2$;
$Al(HSO_4)_3$; $Al(HSO_4)(SO_4)$; $Al_2(HSO_4)_4SO_4$;
$Ca(HSO_4)_2$; $Ca_2(HSO_4)_2SO_4$; $Mg_2(HSO_4)_2SO_4$;
$Mg(HSO_4)_2$; $Zn(HSO_4)_2$; $Zn_2(HSO_4)_2SO_4$;
$H_2SO_4$; $Fe(II)(HSO_4)_2$; $Fe(III)(HSO_4)_3$;
$Fe(II)_2(HSO_4)_2SO_4$; $Fe(III)(HSO_4)SO_4$; and
$Fe(III)_2(HSO_4)_4SO_4$;
in a stoichrometric ratio of aspartame:solubilizing agent in a range of from about 10:1 to about 1:20; to an aqueous solution.

7. A method of preparing sweetened aqueous media comprising: adding aspartame to an aqueous solution in which is dissolved a solubizing agent selected from the group consisting of;
$NaHSO_4$; $KHSO_4$; $NH_4HSO_4$; $CaCl_2$; $MgCl_2$;
$Al(HSO_4)_3$; $Al(HSO_4)(SO_4)$; $Al_2(HSO_4)_4SO_4$;
$Ca(HSO_4)_2$; $Ca_2(HSO_4)_2SO_4$; $Mg_2(HSO_4)_2SO_4$;
$Mg(HSO_4)_2$; $Zn(HSO_4)_2$; $Zn_2(HSO_4)_2SO_4$;
$H_2SO_4$; $Fe(II)(HSO_4)_2$; $Fe(III)(HSO_4)_3$;
$Fe(II)_2(HSO_4)_2SO_4$; $Fe(III)(HSO_4)SO_4$; and
$Fe(III)_2(HSO_4)_4SO_4$;
in a stoichiometric ratio of aspartame:solubilizing agent in a range of from about 10:1 to about 1:20.

8. A method according to Claim 7 wherein the solubilizing agent is $NaHSO_4$, $KHSO_4$, $H_2SO_4$ or $Mg(HSO_4)_2$.

9. A method according to Claim 8 wherein the solubilizing agent is $NaHSO_4$, $KHSO_4$ or $Mg(HSO_4)_2$.

10. A method according to Claims 7, 8 or 9 wherein the stoichiometric ratio of aspartame : solubilizing agent is from about 1:2 to about 1:1.

0109685

European Patent Office

# EUROPEAN SEARCH REPORT

Application number

EP 83 11 1610

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE-A-2 525 421 (GENERAL FOODS) * Claims 1-7 * | 1,6,7 | A 23 L 1/236<br>A 23 L 2/38 |
| A | US-A-3 875 311 (EISENSTADT) * Claim 1 * | 1,6,7 | |
| A | US-A-3 875 312 (EISENSTADT) * Claim 1 * | 1,6,7 | |

TECHNICAL FIELDS SEARCHED (Int. Cl. 3)

A 23 L

The present search report has been drawn up for all claims

| Place of search | Date of completion of the search | Examiner |
|---|---|---|
| THE HAGUE | 31-01-1984 | VAN MOER A.M.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document